# EUROPÄISCHE PATENTSCHRIFT

(11) **EP 3 032 113 B1**
(45) Veröffentlichungstag und Bekanntmachung des Hinweises auf die Patenterteilung: **30.01.2019**
(21) Anmeldenummer: 15197320.3
(22) Anmeldetag: 01.12.2015
(51) Int. Cl.: F16B 1/00, F16B 37/04

(54) **VERFAHREN ZUM BEFESTIGEN EINES BEFESTIGUNGSELEMENTS AN EINER MONTAGESCHIENE SOWIE BEFESTIGUNGSELEMENT**
METHOD FOR FIXING A FIXING ELEMENT TO A FIXING RAIL AND FIXING ELEMENT
PROCEDE DE FIXATION D'UN ELEMENT DE FIXATION SUR UN RAIL DE MONTAGE ET ELEMENT DE FIXATION

(30) Priorität: 09.12.2014 DE 102014018171; 27.10.2015 DE 102015118314
(43) Veröffentlichungstag der Anmeldung: 15.06.2016
(73) Patentinhaber: fischerwerke GmbH & Co. KG, 72178 Waldachtal (DE)
(72) Erfinder: Linka, Martin, 72160 Horb a.N. (DE); Lehmann, David, 72275 Alpirsbach (DE); Peller, Manfred, 72160 Horb (DE); Förmer, Thomas, 72160 Horb-Bildechingen (DE)
(74) Vertreter: Lehmann, David

(56) Entgegenhaltungen:
- EP-A1- 1 188 939
- DE-U1- 20 023 798
- DE-U1- 29 700 737
- DE-U1- 29 713 037
- US-A1- 2004 131 439

## Beschreibung

Die Erfindung betrifft ein Verfahren zum Befestigen eines Befestigungselements an einer Montageschiene mit den Merkmalen des Oberbegriffs des Anspruchs 1 sowie ein Befestigungselement mit den Merkmalen des Oberbegriffs des Anspruchs 5.

Aus der Europäischen Patentschrift EP 1 039 155 B1 ist ein Befestigungselement zur Befestigung an einer Montageschiene bekannt, insbesondere zum Befestigen eines Anbauteils an einer Montageschiene. Derartige Befestigungssysteme werden zur Montage von Installationssystemen wie Ver- und Entsorgungsleitungen verwendet. Eine Montageschiene ist typischerweise ein lang gestrecktes Profil aus Stahl, mit C-förmigem Querschnitt, das eine in Längsrichtung verlaufende schlitzförmige Öffnung mit nach innen gebogenen Randabschnitten aufweist. Das Anbauteil kann beispielsweise ein Winkelstück zum Ausbilden einer Eckverbindung zweier Montageschienen sein. Das Befestigungselement besteht aus einem Verankerungskörper in Form einer hammerkopfförmigen Schiebemutter, die mittels einer Schraube an einem plattenförmigen Auflagerelement angeordnet ist. Der Verankerungskörper ist mit dem Auflagerelement durch ein Koppelelement drehfest verbunden, so dass ein Drehen des Auflagerelements um die Achse der Schraube eine entsprechende Drehung des Verankerungskörpers bewirkt. Das Koppelelement des gattungsgemäßen Befestigungselements besteht aus zwei Teilen. Der erste hülsenförmige Teil ist mittels zweier stiftförmiger Sicherungselemente axial- und drehfest mit dem Auflagerelement verbunden. Der zweite Teil bildet eine topfförmige Hülse, die einen Boden mit einer Öffnung für den Schaft der Schraube sowie zwei axiale Fortsätze aufweist, zwischen denen der Verankerungskörper drehfest gehalten ist. Der erste Teil des Koppelelements ist drehfest, aber axial beweglich in der topfförmigen Hülse aufgenommen, so dass die beiden Teile des Koppelelements teleskopierbar sind. In der topfförmigen Hülse ist zudem eine Druckfeder angeordnet, die sich am Boden der Hülse abstützt und gegen das Auflagerelement drückt. Zur Montage wird das Befestigungselement durch eine Durchgangsöffnung des Anbauteils geführt, das Anbauteil wird auf die geschlitzte Seite der Montageschiene aufgesetzt, und das Befestigungselement wird um die Schraubachse gedreht, wodurch der Verankerungskörper die Randabschnitte hintergreift. Dabei liegt das Befestigungselement mit einem an der topfförmigen Hülse ausgebildeten umlaufenden Bund an dem Anbauteil an. Die Feder verspannt den Bund mit dem Verankerungskörper und somit das Anbauteil gegen die Montageschiene, so dass ein Verschieben des Anbauteils entlang der Montageschiene verhindert wird. Das Befestigungselement befindet sich nun in einer Montagestellung, in der der Verankerungskörper durch Druck auf die Schraube vom Bund weg bewegt und die Verspannung gelöst werden kann, so dass der Verankerungskörper nicht mehr an den Randabschnitten der Montageschiene anliegt und das Befestigungselement zusammen mit dem Anbauteil verschoben werden kann, bis das Anbauteil endgültig positioniert ist. Wenn sich das Anbauteil dann in einer gewünschten Position befindet, kann das plattenförmige Auflagerelement durch Drehen der Schraube zum Verankerungskörper hin bewegt und mit dem Verankerungskörper gegen die Montageschiene verspannt werden. Das Auflagerelement liegt dabei auf dem Anbauteil auf und drückt es gegen die Montageschiene, so dass das Anbauteil unverschieblich an der Montageschiene gehalten ist. Das Befestigungselement befindet sich nun in einer Endstellung, in der der Verankerungskörper einen bestimmten Abstand vom Auflagerelement aufweist und aus der es nur durch ein Zurückdrehen der Schraube gelöst werden kann. Nachteilig an dem bekannten Befestigungselement ist, dass ein Verwender nicht immer zweifelsfrei erkennen kann, ob sich das Befestigungselement in der Montage- oder in der Endstellung befindet.

Aufgabe der Erfindung ist, ein Befestigungselement und ein Verfahren zum Befestigen vorzuschlagen, die den erwähnten Nachteil beheben.

Diese Aufgabe wird erfindungsgemäß durch ein Verfahren mit den Merkmalen des Anspruchs 1 sowie durch ein Befestigungselement mit den Merkmalen des Anspruchs 5 gelöst. Vorteilhafte Weiterbildungen des Verfahrens und des Befestigungselements sind in den abhängigen Ansprüchen angegeben.

Zum Befestigen eines Befestigungselements an einer Montageschiene wird das Befestigungselement erfindungsgemäß zunächst in eine Öffnung der Montageschiene eingebracht, wobei das Befestigungselement nicht vollständig, sondern auch nur teilweise eingebracht werden kann. Bei der Montageschiene handelt es sich insbesondere um ein lang gestrecktes C-förmiges Profil, das insbesondere aus Stahl hergestellt ist. Die Montageschiene weist eine Öffnung auf, deren Länge größer als ihre Breite ist, und die durch in Schienenlängsrichtung verlaufende seitliche Randabschnitte begrenzt ist. Insbesondere ist die Öffnung schlitzförmig und erstreckt sich in Längsrichtung über die gesamte Länge der Montageschiene. Mit dem Befestigungselement kann insbesondere ein Anbauteil an der Montageschiene befestigt werden. Das Anbauteil, beispielsweise ein Winkelelement aus Metall, weist hierfür eine Durchgangsöffnung für das Befestigungselement auf. Alternativ kann mit dem Befestigungselement beispielsweise eine Rohrschelle an der Montageschiene befestigt werden. Das Befestigungselement umfasst ein Auflagerelement zur Auflage auf der Montageschiene oder einer der Montageschiene abgewandten Seite des Anbauteils. Beim Befestigen eines Anbauteils mit dem Befestigungselement verhindert das Auflagerelement, dass das Befestigungselement vollständig durch die Durchgangsöffnung hindurch eingesteckt werden kann. Am Befestigungselement ist ein Verankerungskörper zum Eingriff in die Montageschiene angeordnet. Der Verankerungskörper weist eine Breite auf, die kleiner oder gleich der Breite der Öffnung und gegebenenfalls auch der Durchgangsöffnung ist. Zudem ist die Länge des Verankerungskörpers kleiner oder gleich der Länge der Öffnung und gegebenenfalls der Durchgangsöffnung. Der Verankerungskörper und das Auflagerelement sind insbesondere axialfest verstellbar miteinander verbunden, d.h. es können axial wirkende Kräfte zwischen dem Verankerungskörper und dem Auflagerelement übertragen werden, trotzdem kann der Abstand zwischen dem Verankerungskörper und dem Auflagerelement in axialer Richtung verändert werden. Der Verankerungskörper wird in die Öffnung der Montageschiene eingebracht. Sofern ein Anbauteil vorhanden ist, wird er hierzu durch die Durchgangsöffnung hindurch gesteckt. Wird ein Anbauteil an der Montageschiene befestigt, so kann das Befestigungselement bereits vor dem Auflegen des Anbauteils auf die Montageschiene mit dem Anbauteil verbunden sein oder nach dem Auflegen in die Durchgangsöffnung eingeführt werden. Nach dem Einführen des Verankerungskörpers in die Öffnung der Montageschiene wird der Verankerungskörper in der Montageschiene in eine Montagestellung gedreht, so dass der Verankerungskörper die seitlichen Randabschnitte der Öffnung hintergreift. Durch die Anlage des Verankerungskörpers an den Randabschnitten ist das Befestigungselement in der Öffnung gehalten. Um einen möglichst guten Halt zu gewährleisten, können die Randabschnitte eine Zahnung aufweisen, die mit einer Zahnung des Verankerungskörpers korrespondiert. Das Befestigungselement befindet sich nun in einer Montagestellung, in der eine Bewegung des Verankerungselements in die Montageschiene hinein möglich ist, derart dass das Verankerungselement von den Randabschnitten freikommt, so dass das Befestigungselement, gegebenenfalls mit dem Anbauteil, in eine gewünschte Position verschoben werden kann. Das Auflagerelement muss in dieser Montagestellung noch nicht an der Montageschiene oder am Anbauteil anliegen. Um trotzdem ein Verspannen des Befestigungselements mit der Montageschiene und dem gegebenenfalls vorhandenen Anbauteil in dieser Montagestellung zu ermöglichen, können zwischen dem Auflagerelement und dem Verankerungskörper beispielsweise ein zusätzlicher Bund oder Vorsprünge angeordnet sein. Der Bund oder die Vorsprünge können eine Federwirkung aufweisen, um eine leichte Vorspannung vor dem endgültigen Verspannen in der gewünschten Position zu ermöglichen. Alternativ kann ein gesondertes Federelement vorgesehen sein. Ist die gewünschte Position des Befestigungselements erreicht, wird der Verankerungskörper mittels der Federwirkung gegen die Randabschnitte der Montageschiene und das Auflagerelement gegen die Montageschiene bzw. gegen das Anbauteil und somit das Anbauteil gegen die Schiene verspannt, derart, dass das Auflagerelement und der Verankerungskörper planmäßig soweit zueinander hin bewegt worden sind, dass ein Verschieben des Befestigungselements bzw. des Anbauteils entlang der Montageschiene nicht mehr möglich ist und sich das Befestigungselement in einer Endstellung befindet. Beim Verspannen wird der Verankerungskörper gegen das Auflagerelement bewegt, bis der Verankerungskörper an der Montageschiene und das Auflagerelement an der Montageschiene oder am Anbauteil anliegen, so dass sie in der Endstellung nicht mehr weiter zueinander bewegt werden können und einen bestimmten Abstand voneinander haben.. Das Verspannen erfolgt insbesondere durch eine Relativbewegung eines Gewindeelements, beispielsweise einer Mutter zu einer Schraube oder einer Gewindestange, mit der der Verankerungskörper mit dem Auflagerelement verbunden ist. Insbesondere kann der Verankerungskörper hierfür mit einer Durchgangsbohrung mit Innengewinde als Mutter ausgeführt sein, in die eine Schraube als Gewindeelement eingeschraubt wird.

Erfindungsgemäß wird beim Verspannen, also beim Überführen des Befestigungselements von der Montagestellung in die Endstellung, ein Markierungselement von einer ersten Markierstellung, die anzeigt, dass sich das Befestigungselement in der Montagestellung befindet, in eine zweite Markierstellung bewegt, die anzeigt, dass sich das Befestigungselement in der Endstellung befindet. Dabei wird das Markierungselement insbesondere relativ zum Auflagerelement bewegt. Das Markierungselement kann beispielsweise ein eigenständiges Bauteil des Befestigungselements oder aber eine Markierung an einem Bauteil des Befestigungselements sein, beispielsweise mit einer auffälligen Färbung.

Vorzugsweise erfolgt die Bewegung des Markierungselements beim Verspannen von der ersten Markierstellung in die zweite Markierstellung im Wesentlichen parallel zu jener Achse, entlang der sich der Verankerungskörper beim Verspannen relativ zum Auflagerelement bewegt. Insbesondere erfolgt diese Bewegung parallel zu einer Längsachse eines Gewindeelements, das zum Verspannen um seine Längsachse gedreht wird.

In einer Ausführungsform ist das Markierungselement in der ersten Markierstellung für einen Verwender ganz oder in wesentlichen Teilen verborgen und in der zweiten Markierstellung, wenn sich das Befestigungselement in der Endstellung befindet, sichtbar, d.h. optisch gut wahrnehmbar. Insbesondere steht das Markierungselement hierzu in der Endstellung über die der Montageschiene abgewandten Seite des Auflagerelements über. Das Markierungselement, das in der Montagestellung, also vor dem Verspannen, verborgen und somit nicht oder im Wesentlichen nicht sichtbar ist, ist in der Endstellung sichtbar, also von einem Verwender gut zu erkennen. Das beim Verspannen sichtbar gewordene Markierungselement zeigt einem Verwender an, dass sich das Befestigungselement in der Endstellung befindet und das Befestigungselement ordnungsgemäß an der Montageschiene befestigt ist. Insbesondere ist das Markierungselement derart am Befestigungselement angeordnet, dass es beim Verspannen aufgrund der Relativbewegung des Auflagerelements hin zum Verankerungskörper sichtbar wird.

Alternativ ist das Markierungselement in der ersten Markierstellung sichtbar und in der zweiten Markierstellung verborgen. Beim Verspannen wird in diesem Fall das Markierungselement von der ersten Markierstellung, in der es von einem Verwender gut und leicht optisch wahrnehmbar ist, in die zweite Markierstellung überführt, in der es nicht oder in wesentlichen Teilen für einen Verwender nicht sichtbar ist.

In der Endstellung ist das Befestigungselement fest mit der Montageschiene verbunden und kann nicht mehr relativ zur Montageschiene verschoben werden, wenn nicht die Verspannung gelöst und der Verankerungskörper vom Auflagerelement weg bewegt und hierdurch das Befestigungselement von der Endstellung in die Montagestellung überführt wird. Bei diesem Entspannen wird das Markierungselement von der zweiten Markierstellung wieder in die erste Markierstellung überführt. Dadurch, dass in der Endstellung das Markierungselement, abhängig von der Ausführungsform sichtbar bzw. verborgen ist, ist eine Überprüfung einer korrekt erfolgten Montage des Befestigungselements an der Montageschiene durch eine einfache, rein optische Kontrolle möglich. Insbesondere dann, wenn das Markierungselement eine Farbe aufweist, die sich von der Farbe bzw. den Farben anderer Bauteile des Befestigungselements unterscheidet, die in der Endstellung für einen Anwender sichtbar sind, ist eine einfache Kontrolle der korrekt erfolgten Montage auch aus größerer Entfernung möglich, beispielsweise wenn das Befestigungselement in einer Montageschiene an einer Decke eines Gebäudes befestigt ist. Gemäß dem Verfahren nach Anspruch 1 unterscheidet sich das Markierungselement farblich vom Auflagerelement.
Für das erfindungsgemäße Verfahren kann insbesondere ein erfindungsgemäßes Befestigungselement verwendet werden. Das erfindungsgemäße Befestigungselement zum Befestigen an einer Montageschiene weist einen Verankerungskörper zum Eingriff in die Montageschiene auf, der insbesondere axialfest verstellbar mit einem Gewindeelement verbunden ist. Der Verankerungskörper kann beispielseweise eine quaderförmige Mutter sein, deren Länge größer als ihre Breite ist, in die eine Schraube als Gewindeelement eingeschraubt ist. Alternativ kann der Verankerungskörper beispielsweise mit einer Gewindestange einstückig als Hammerkopfschraube ausgebildet oder mit dieser drehfest verbunden sein. Das Gewindeelement erstreckt sich entlang einer Längsachse in eine axiale Richtung, die insbesondere die Achse des Befestigungselements bildet und durchgreift ein Auflagerelement zur Auflage auf einem Anbauteil oder der Montageschiene. Das Befestigungselement weist ein Federelement zwischen dem Auflageelement und dem Verankerungskörper auf, das insbesondere auch von dem Gewindeelement durchgriffen sein kann. In einer Montagestellung verspannt das Federelement den Verankerungskörper gegen die Montageschiene, so dass das Befestigungselement, gegebenenfalls gemeinsam mit dem Anbauteil, an der Montageschiene temporär fixiert ist. Wird der Verankerungskörper in der Montagestellung durch eine Bewegung entgegen der Federkraft vom Auflagerelement weg bewegt, so kann die temporäre Fixierung gelöst und das Befestigungselement entlang der Montageschiene verschoben und positioniert werden. Befindet sich das Befestigungselement nach dem Verschieben in der gewünschten Position, so kann das Befestigungselement aus der Montagestellung durch ein Verspannen des Verankerungskörpers gegen das Auflagerelement in die Endstellung überführt werden, in der der Verankerungskörper einen bestimmten Abstand vom Auflagerelement aufweist, mit dem eine Fixierung des Befestigungselements an der Montageschiene möglich ist. Insbesondere wird der Verankerungskörper mittels des Gewindeelements axial bewegt. Das Gewindeelement kann eine Schraube sein, die mit ihrem Kopf am Auflagerelement aufliegt und die in den als Mutter ausgebildeten Verankerungskörper eingeschraubt wird. Dabei wird das Auflagerelement axial zum Verankerungskörper bewegt und gegen die Montageschiene und das Auflagerelement gegen das Anbauteil gedrückt, wodurch der Verankerungskörper und das Auflagerelement sowie das Anbauteil und die Montageschiene gegeneinander verspannt werden.

Erfindungsgemäß ist am Befestigungselement ein Markierungselement angeordnet, das beim Verspannen von der ersten Markierstellung in die zweite Markierstellung überführbar ist, in der es anzeigt, dass sich das Befestigungselement in einer Endstellung befindet. Insbesondere wird das Markierungselement hierzu relativ zum Auflagerelement bewegt. Insbesondere bewegt sich das Markierungselement beim Verspannen ebenfalls, bezogen auf das Gewindeelement, in axialer Richtung. Das Markierungselement kann durch eine Relativbewegung zum Auflagerelement aus der ersten Markierposition in die zweite Markierposition überführt werden, in der es dem Verwender anzeigt, dass sich das Befestigungselement in der Endstellung befindet. Das erfindungsgemäße Befestigungselement kann auch mehrere Markierungselemente aufweisen.

Vorzugsweise ist axial zwischen dem Auflagerelement und dem Verankerungskörper ein Koppelelement angeordnet, das mit dem Auflagerelement drehgekoppelt ist. Das Koppelelement ist außerdem insbesondere mit dem Verankerungselement drehgekoppelt. Vorzugsweise erfolgt die Drehkopplung des Koppelelements mit dem Auflagerelement mittels des Markierelements, wodurch ein einfacher Aufbau des Befestigungselements mit wenigen Bauteilen möglich ist. Insbesondere ist das Koppelelement auch mit dem Verankerungskörper drehgekoppelt, beispielsweise durch zwei axiale Vorsprünge, wodurch das Auflagerelement mit dem Verankerungskörper über das Koppelelement drehgekoppelt ist.

Vorzugsweise weist das Befestigungselement einen Bund zur Auflage auf dem Anbauteil oder der Montageschiene auf, der axial zwischen dem Auflagerelement und dem Verankerungskörper angeordnet ist. Der Bund verhindert beim Einführen des Befestigungselements in eine Öffnung einer Montageschiene, dass das Befestigungselement zu tief in die Montageschiene eingebracht werden kann. Der Bund kann beispielsweise am Koppelelement als ein in radialer Richtung abstehender Ring oder als ein in radialer Richtung abstehender Vorsprung ausgebildet sein, wobei auch mehrere, voneinander beabstandete Vorsprünge vorhanden sein können. Insbesondere kann das Befestigungselement derart ausgebildet sein, dass zur temporären Fixierung des Befestigungselements an der Montageschiene in der Montagestellung der Bund und nicht das Auflagerelement an der Montageschiene anliegt. In diesem Fall kann der Bund, wenn er auf der Montageschiene oder dem Anbauteil aufliegt, mit dem Federelement gegen den an den Randabschnitten anliegenden Verankerungskörper in der Montagestellung verspannt werden. In der Montagestellung ist das Verankerungselement aber axial vom Bund weg bewegbar, beispielsweise unter Zusammendrücken des Federelements, wodurch der Verankerungskörper nicht mehr an der Montageschiene anliegt und das Befestigungselement entlang der Montageschiene in der Öffnung verschoben werden kann.

Erfindungsgemäß ist vorgesehen, dass das Markierungselement das Auflagerelement durchdringt. Hierdurch ist ein einfacher Aufbau des Befestigungselements möglich, das somit preiswert hergestellt werden kann.
Vorzugsweise ist das Markierungselement einstückig mit dem Koppelelement, insbesondere aus Kunststoff durch Spritzgießen hergestellt, was eine kostengünstige Massenproduktion des Befestigungselements ermöglicht.
Bei einer bevorzugten Ausgestaltungsform des erfindungsgemäßen Befestigungselements steht das Markierungselement in der Endstellung sichtbar über das Auflagerelement über. "Überstehen" meint hier insbesondere, dass das Markierungselement in der Endstellung gegenüber dem Auflagerelement hervortritt, insbesondere aus der der Montageschiene abgewandten Seite des Auflagerelements. Insbesondere durchdringt das Markierungselement dabei das Auflagerelement.
Der Abstand des Markierungselements zur Längsachse des Gewindeelements ist insbesondere größer als der halbe Durchmesser eines Kopfelements des Gewindeelements. Weicht die Form des Kopfelements von einer zylindrischen Form ab, so ist mit "Durchmesser" der Durchmesser eines das Kopfelement umschreibenden Zylinders gemeint. Das Kopfelement kann beispielsweise ein Schraubenkopf mit Innen- oder Außensechskant oder eine Mutter für eine Schraube mit metrischem Gewinde sein.

Durch diese Ausgestaltung wird verhindert, dass das Kopfelement das Markierungselement in der Endstellung verdeckt.

Das Auflagerelement kann mindestens ein Eingriffselement zum Eingriff in eine Durchgangsöffnung des Anbauteils aufweisen, das zum Verankerungselement hin gebogen ist. In der Endstellung greift das Eingriffselement in die Durchgangsöffnung des Anbauteils ein und sichert das Anbauteil an der Montageschiene gegen ein Verschieben in Richtung der Breite der Öffnung. Zusätzlich kann das Eingriffselement auch in die Öffnung der Montageschiene eingreifen. Insbesondere ist das Markierungselement derart gestaltet, dass es erst dann als Markierung in der Endstellung sichtbar ist, wenn das Eingriffselement planmäßig in die Durchgangsöffnung eingreift. Soll das Markierungselement in der Endstellung über das Auflagerelement überstehen, so ist insbesondere die Länge des Markierungselements auf die notwendige Tiefe des Eingriffs des Eingriffselements in die Durchgangsöffnung derart abgestimmt, dass das Markierungselement erst bei planmäßigem Eingriff für einen Verwender sichtbar ist.

Das Federelement des erfindungsgemäßen Befestigungselements kann eine Schraubenfeder sein, die insbesondere einen Innendurchmesser aufweist, der größer als der Außendurchmesser des Abschnitts des Gewindeelements ist, den die Schraubenfeder umschließt. Das Gewindeelement ist somit in der Schraubenfeder beweglich. Um das Gewindeelement axialfest mit dem Auflagerelement zu verbinden, ist am Befestigungselement ein zusätzliches Halteelement angeordnet. Das Halteelement ist insbesondere ringförmig und/oder elastisch und aus einem Kunststoff hergestellt. Alternativ ist das Federelement eine Kegelfeder, die derart am Gewindeelement angeordnet ist, dass sie das Gewindeelement axialfest mit dem Auflagerelement verbindet. Insbesondere ist der kleinste Innendurchmesser der Kegelfeder kleiner als der Außendurchmesser des Abschnitts des Gewindeelements, den die Kegelfeder umschließt. Die Kegelfeder kann dadurch so am Gewindeelement angeordnet werden, dass sie das Gewindeelement axialfest mit dem Auflagerelement verbindet. Die axialfeste Verbindung von Gewindeelement und Auflagerelement verhindert, dass das Gewindeelement ungewollt gegen das Auflagerelement verschoben werden kann, wodurch beispielsweise eine Montage des Befestigungselements an einer an einer Decke montierten Schiene nicht oder nur umständlich möglich wäre.

Bei einer weiteren bevorzugten Ausgestaltungsform des erfindungsgemäßen Befestigungselements ist das Markierungselement zwischen dem Federelement und einem Kopfelement des Gewindeelements angeordnet, wobei das Federelement über das Markierungselement mittelbar auf das Kopfelement wirkt. In diesem Fall kann das Markierungselement gemeinsam mit dem Kopfelement axial und insbesondere relativ zum Auflagerelement bewegt werden.

Vorzugsweise ist das Markierungselement eine hohlzylindrische Hülse, die insbesondere am Gewindeelement gelagert ist, wobei das Gewindeelement die Hülse durchgreift. Insbesondere ist der Durchmesser der Hülse kleiner als der Durchmesser des Kopfelements, insbesondere verdeckt das Kopfelement die Hülse in der zweiten Markierstellung.

Weiterhin ist bevorzugt, dass am Befestigungselement ein Orientierungselement angeordnet ist, das die Ausrichtung des Verankerungskörpers anzeigt, wenn der Verankerungskörper in eine Öffnung einer Montageschiene eingebracht ist. Bei dem Indikationselement handelt es sich beispielsweise um eine pfeil- oder dreiecksförmige Markierung, die die Richtung anzeigt, in die das Befestigungselement zur Längsachse der Montageschiene orientiert sein muss, damit der Verankerungskörper Randabschnitte der Montageschiene hintergreifen kann. Das Orientierungselement kann beispielsweise zudem oder alternativ als farbige Markierung ausgebildet sein.

Bei einer weiteren bevorzugten Ausgestaltungsform des erfindungsgemäßen Befestigungselements ist das Markierungselement in der Montagestellung, also dann, wenn sich das Markierungselement in der ersten Markierstellung befindet, verborgen und es steht nicht über das Auflagerelement über. Insbesondere liegt das Markierungselement in der ersten Markierstellung mit Unterstand innerhalb des Auflagerelements, so dass es für einen Verwender im Wesentlichen durch das Auflagerelement verdeckt ist. Alternativ ist das Markierungselement in der Endstellung verborgen und es steht nicht über das Auflagerelement über. Ein Verwender kann somit klar und eindeutig aufgrund der Position des Markierungselements erkennen, ob sich das Befestigungselement in der Montagestellung oder der Endstellung befindet.

Die Erfindung wird nachfolgend anhand von drei in den Figuren dargestellten Ausführungsbeispielen näher erläutert.

Es zeigen:
- Figur 1: ein erstes erfindungsgemäßes Befestigungselement in einer perspektivischen Explosionsdarstellung;
- Figur 2: eine Befestigungsanordnung bestehend aus einer Montageschiene, einem Anbauteil und zwei ersten erfindungsgemäßen Befestigungselementen in einer perspektivischen Ansicht;
- Figur 3: die Befestigungsanordnung mit zwei ersten erfindungsgemäßen Befestigungselementen in einer Schnittdarstellung;
- Figur 4: die Befestigungsanordnung mit zwei alternativen erfindungsgemäßen Befestigungselementen in einer Schnittdarstellung;
- Figur 5: ein drittes erfindungsgemäßes Befestigungselement in einer perspektivischen Darstellung;
- Figur 6: das dritte erfindungsgemäße Befestigungselement in einer perspektivischen Explosionsdarstellung;
- Figur 7: eine Befestigungsanordnung bestehend aus einer Montageschiene, einem Anbauteil und einem dritten erfindungsgemäßen Befestigungselement in einer Schnittdarstellung;
- Figur 8: die Befestigungsanordnung der Figur 7, bei der der Verankerungskörper relativ zum Auflagerelement in die Öffnung der Montageschiene hinein verschoben ist;
- Figur 9: die Befestigungsanordnung der Figuren 7 und 8 in einer Draufsicht; und
- Figur 10: die Befestigungsanordnung der Figuren 7 bis 9 in einer gegenüber den Figuren 7 und 8 um 90° gedrehten Schnittdarstellung, mit dem dritten erfindungsgemäßen Befestigungselement in einer Endstellung.

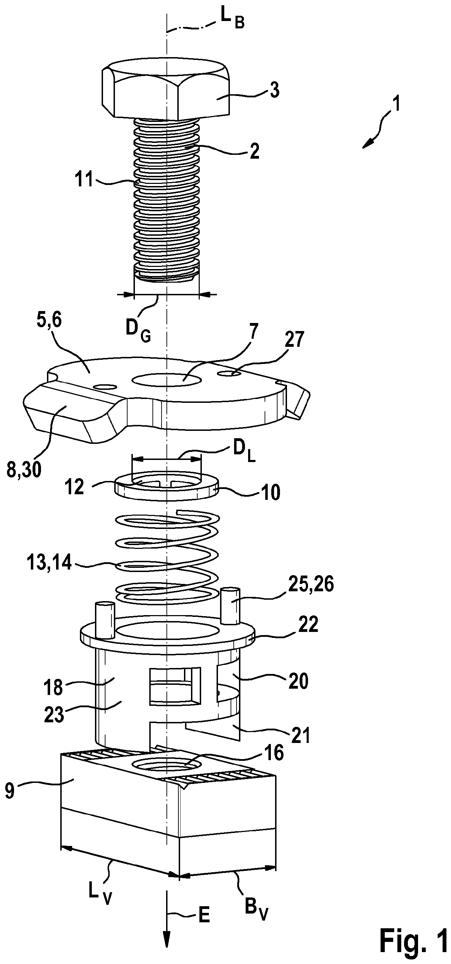

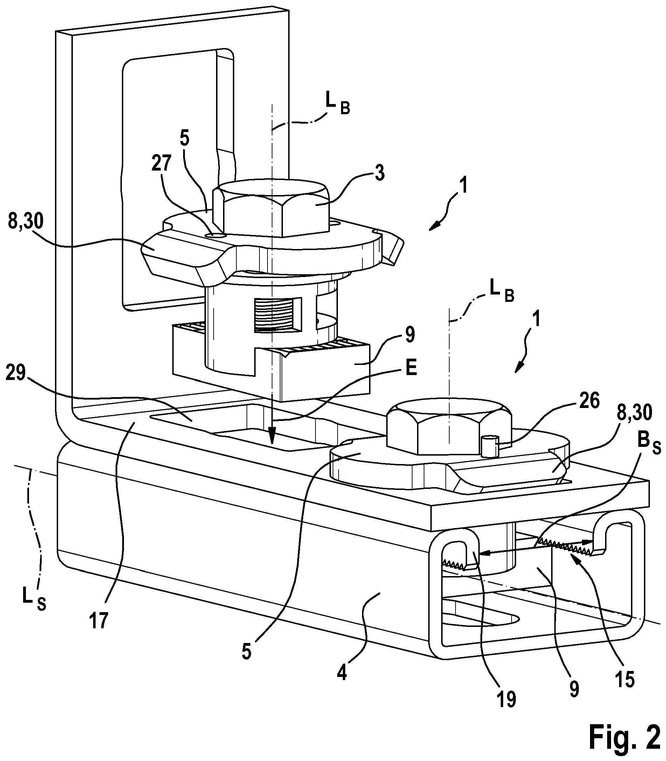

Figur 1 zeigt ein erstes erfindungsgemäßes Befestigungselement 1. Das Befestigungselement 1 umfasst ein Gewindeelement 2, das hier als Schraube aus Metall mit einem metrischen Gewinde 11 und einem Sechskantkopf als Kopfelement 3 ausgebildet ist. Das Gewinde 11 erstreckt sich axial entlang einer Längsachse L_{B} des Befestigungselements 1. Das Kopfelement 3 bildet das hintere Ende des Befestigungselements 1. In Einbringrichtung E, in der das Befestigungselement 1 in eine Montageschiene 4 (Figur 2) eingebracht wird, schließt sich ein Auflagerelement 5 aus Metall zur Auflage auf einem Anbauteil 17 an. Das Auflagerelement 5 ist als flache Platte 6 mit einer mittigen Durchgangsbohrung 7 für das Gewinde 11 des Gewindeelements 2 ausgebildet, an der auf gegenüberliegenden Seiten zwei Eingriffselemente 8 angeordnet sind. Die Eingriffselemente 8 sind als kragarmartige Laschen ausgebildet, die nach vorn, in Einbringrichtung E zu einem Verankerungskörper 9 hin, gebogen sind und in Einbringrichtung E nach vorn über die Platte 6 überstehen. Zudem stehen die Eingriffselemente 8 radial, an sich gegenüberliegenden Rändern vom an sich kreisförmigen Grundkörper der Platte 6 ab. In Einbringrichtung E vor dem Auflagerelement 5 ist ein Halteelement 10 in Form einer elastischen Kunststoffscheibe angeordnet. Das Halteelement 10 weist mittig ein Loch 12 mit einem Durchmesser D_{L} auf, der kleiner als der Außendurchmesser D_{G} des Gewindes 11 des Gewindeelements 2 ist. Im zusammengebauten Zustand, wenn das Auflagerelement 5 und das Halteelement 10 auf das Gewinde 11 des Gewindeelements 2 aufgeschoben bzw. aufschraubt sind, liegt das Halteelement 10 an der vorderen Seite des Auflagerelements 5 an und umschließt das Gewinde 11 formschlüssig. Das Halteelement 10 greift dabei in das Gewinde 11 ein und hält das Auflagerelement 5 axialfest am Gewindeelement 2. In Einbringrichtung E vor dem Halteelement 10 sind zudem eine Schraubenfeder 13 als Federelement 14, ein Koppelelement 18 sowie der Verankerungskörper 9 angeordnet. Im zusammengebauten Zustand durchgreift das Gewindeelement 2 auch die Schraubenfeder 13 und das Koppelelement 18 und ist in einer Gewindeaufnahme 16 des Verankerungskörpers 9 drehbar gelagert. Der Verankerungskörper 9 ist somit mit dem Gewindeelement 2 axialfest verstellbar verbunden. Durch Drehen des Gewindeelements 2 um die Längsachse L_{B} kann das Gewinde 11 in die Gewindeaufnahme 16 ein- oder aus ihr herausgedreht und dadurch der Verankerungskörper 9 zum Auflagerelement 5 hin oder vom Auflagerelement 5 weg bewegt werden.

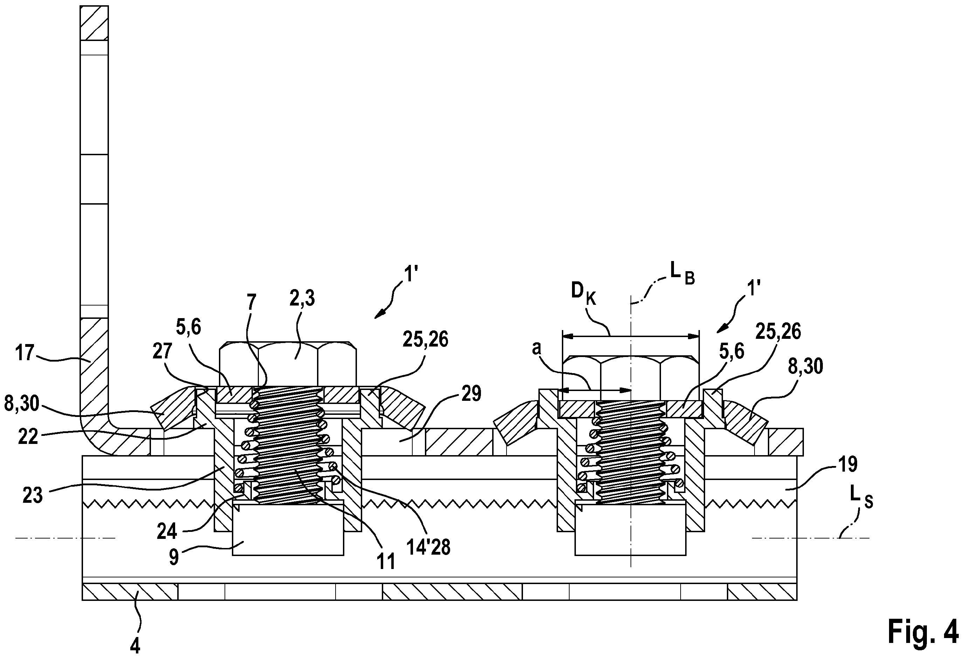

Alternativ zur Verwendung des Halteelements 10 kann statt der Schraubenfeder 13, die einen im Wesentlichen gleichbleibenden Innen- und Außendurchmesser aufweist, eine Kegelfeder 28 als Federelement 14' verwendet werden, wie dies bei den in Figur 4 dargestellten Befestigungselementen 1' zu sehen ist. Die anderen Bauteile des Befestigungselements 1' sind gegenüber den in den Figuren 1 bis 3 dargestellten Befestigungselementen 1 unverändert. Die Kegelfeder 28 ist derart gestaltet, dass sich ihr Innendurchmesser nach hinten zum Auflagerelement 5 hin verkleinert, bis der Draht der Kegelfeder 28 in das Gewinde 11 eingreift, wodurch die Kegelfeder 28 axialfest am Gewindeelement 2 angeordnet ist. Die Kegelfeder 28 liegt zudem an dem Auflagerelement 5 an, so dass sie das Gewindeelement 2 mit dem Auflagerelement 5 axialfest verbindet.

Der Verankerungskörper 9 ist aus Metall hergestellt und dient zum Eingriff in eine schlitzartige Öffnung 15 der Montageschiene 4 (Figur 2). Er weist eine Länge L_{V} auf, die größer als die Breite B_{S} der Öffnung 15 der Montageschiene 4 ist. Zudem ist die Breite B_{V} des Verankerungskörpers 9 kleiner als die Breite B_{S} der Öffnung 15, so dass der Verankerungskörper 9 durch die Öffnung 15 in das Innere der Montageschiene 4 eingebracht werden kann. Durch eine Drehung des in die Montageschiene 4 eingebrachten Verankerungskörpers 9 um 90° um die Längsachse L_{B} des Befestigungselements 1 hintergreift der Verankerungskörper 9 seitliche Randabschnitte 19, die die Öffnung 15 begrenzen.

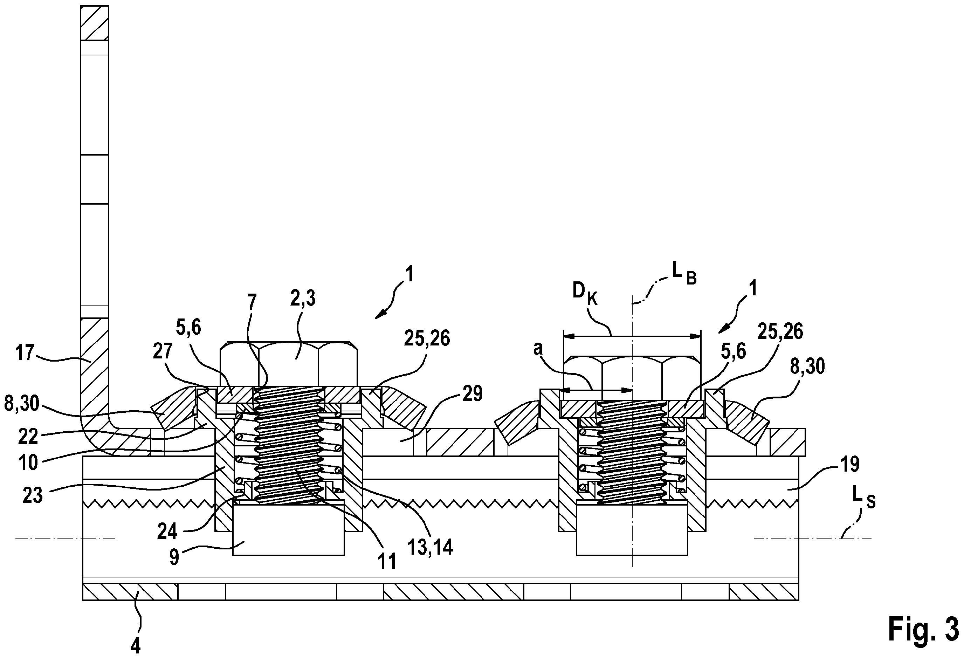

Das Koppelelement 18 weist einen zylinderförmigen Topf 23 als Grundkörper auf, mit rechteckförmigen Durchbrüchen 20 in ihrer Mantelfläche. Am vorderen Ende des Topfs 23 sind zwei nach vorn gerichtete axiale Fortsätze 21 angeordnet, die nach innen gegenüberliegende ebene Flächen aufweisen. Die beiden Fortsätze 21 sind voneinander beabstandet und bilden eine Aufnahme, in der der Verankerungskörper 9 im zusammengebauten Zustand drehfest, aber axial beweglich zum Koppelelement 18 gelagert ist. Im Inneren des Topfs 23 ist eine umlaufende, L-förmige Anschlagschulter 24 für das Federelement 14 angeordnet, an der sich das Federelement 14 im zusammengebauten Zustand gegen das Halteelement 10 abstützt. Das hintere Ende des Topfs 23 bildet ein radial überstehender und in Umfangsrichtung verlaufender Bund 22, der zur Auflage auf dem Anbauteil (Figur 3) dient. Am Bund 22 sind zwei entgegen der Einbringrichtung E nach hinten abstehende, stiftförmige zylindrische Zapfen 25 als Markierungselemente 26 angeordnet. Die Zapfen 25 sind einstückig mit dem Koppelelement 18 und im Spritzgussverfahren mit dem Koppelelement 18 als ein Bauteil aus Kunststoff hergestellt. Im zusammengebauten Zustand sind die Zapfen 25 axialbeweglich in zwei seitlichen Durchgangsbohrungen 27 der Platte 6 gelagert, wodurch das Auflagerelement 5 mit dem Koppelelement 18 bezüglich der Längsachse L_{B} drehfest und somit drehgekoppelt, aber axial verschieblich ist. Die Zapfen 25 und die seitlichen Durchgangsbohrungen 27 weisen einen Abstand a zur Längsachse L_{B} auf, der größer als der halbe Durchmesser D_{K} eines das Kopfelement 3 umschreibenden Zylinders ist, so dass das Kopfelement 3 die seitlichen Durchgangsbohrungen 27 nicht überdeckt.

Zum Befestigen des Anbauteils 17 an der Montageschiene 4 mit einem erfindungsgemäßen Befestigungselement 1, 1' wird zunächst das Anbauteil 17 auf die Montageschiene 4 aufgelegt. Bei dem in den Figuren 2 bis 4 dargestellten Anbauteil 17 handelt es sich um ein Winkelelement aus Stahl. Dann wird der Verankerungskörper 9 des Befestigungselements 1, 1' in die schlitzförmige Öffnung 15 der Montageschiene 4 eingebracht. Hierzu wird das Befestigungselement 1, 1' in eine Durchgangsöffnung 29 des Anbauteils 17 eingesteckt. Die Durchgangsöffnung 29 weist einen Querschnitt auf, der mit der Gestalt des Verankerungskörpers 9 und des Topfs 23 des Koppelelements 18 korrespondiert, die aber kleiner ist, als der Bund 22 und das Auflagerelement 5, so dass der Bund 22 auf dem Anbauteil 17 aufliegt und ein weiteres Einführen des Befestigungselements 1, 1' in die Durchgangsöffnung 29 verhindert. Der axiale Abstand zwischen dem Bund 22 und dem Verankerungskörper 9 ist dabei so gewählt, dass der Verankerungskörper 9 in der Öffnung 15 liegt. Dabei ist die lange Seite des Verankerungskörpers 9 in Richtung der Schienenlängsachse L_{S} orientiert, so dass der Verankerungskörper 9 zwischen die Randabschnitte 19 eingebracht werden kann. In dieser Stellung zeigen die beiden Eingriffselemente 8, die hier die Funktion von Orientierungselementen 30 übernehmen, in Richtung quer zur Schienenlängsachse L_{S.} Die Orientierungselemente 30 zeigen damit einem Verwender an, dass die lange Seite des Verankerungskörpers 9 in Richtung der Schienenlängsachse L_{S} orientiert ist und die Randabschnitte 19 der Montageschiene 4 nicht hintergreift. Zum Befestigen wird der Verankerungskörper 9 in der Montageschiene 4 um 90° um die Längsachse L_{B} des Befestigungselements 1, 1' gedreht. Dabei kann das Gewindeelement 2 und der damit verbundene Verankerungskörper 9 in Einbringrichtung E bewegt werden, so dass der Verankerungskörper 9 von den Randabschnitten 19 freikommt und im Inneren der Montageschiene 4 gedreht werden kann. Durch die Drehkopplung des Verankerungskörpers 9 mit dem Auflagerelement 5 durch das Koppelelement 18 und die Zapfen 25 wird beim Drehen des Auflagerelements 5 durch einen Verwender der Verankerungskörper 9 quer zur Schienenlängsachse L_{S} gestellt, so dass der Verankerungskörper 9 die seitlichen Randabschnitte 19 hintergreift. Der Abstand zwischen dem Bund 22 und dem vorderen Ende des Topfs 23, an dem der Verankerungskörper 9 vor dem Drehen anliegt, ist so gewählt, dass er kleiner als die Höhe der Randabschnitte 19 und der Dicke des Anbauteils 7 ist, so dass der Verankerungskörper 9 nach dem Drehen durch die Kraft des Federelements 14, 14' zum Bund 22 hin gedrückt und der Verankerungskörper somit gegen den Randabschnitt 19 und der Bund 22 gegen das Anbauteil 17 verspannt wird. Die Orientierungselemente 30 zeigen nun in Richtung der Längsachse L_{S} und zeigen einem Verwender an, dass der Verankerungskörper 9 die Randabschnitte 19 hintergreift. Das Befestigungselement 1, 1' befindet sich somit in einer Montagestellung. In der Montagestellung drückt das Federelement 14, 14' das Auflagerelement 5 gegen das Kopfelement 18, so dass zwischen dem Auflagerelement 5 und dem Koppelelement 18 ein Abstand besteht, so dass das Gewindeelement 2 mit dem Auflagerelement 5 in Einbringrichtung E zum Koppelelement 18 hin bewegt werden kann. Bei dieser Bewegung wird auch der mit dem Gewindeelement 2 verbundene Verankerungskörper 9 in Einbringrichtung E bewegt, wodurch er von den Randabschnitten 19 freikommt, so dass das Befestigungselement 1, 1' mit dem Anbauteil 17 in der Öffnung 15 in Schienenlängsrichtung L_{S} verschoben werden kann. In den Figuren 3 und 4 befindet sich das linke Befestigungselement 1, 1' in der Montagestellung.

Durch Eindrehen des Gewindeelements 2 in die Gewindeaufnahme 16 des Verankerungskörpers 9 wird das Auflagerelement 5 axial in Richtung der Längsachse L_{B} des Befestigungselements 1, 1' zum Verankerungskörper 9 hin bewegt, wodurch das Befestigungselement 1, 1' von einer Montagestellung in eine Endstellung überführt wird. Durch das Eindrehen des Gewindeelements 2 in die Gewindeaufnahme 16 wird das Auflagerelement 5 zudem gegen das Anbauteil 17 gepresst, wodurch der Verankerungskörper 9 über die Montageschiene 4 und das Anbauteil 17 gegen das Auflagerelement 5 verspannt wird. Nach dem Verspannen, wenn mittels des Gewindeelements 2 das Auflagerelement 5 gegen das Anbauteil 17 und der Verankerungskörper 9 gegen die Randabschnitte 19 gepresst wird, befindet sich das Befestigungselement 1, 1' in einer Endstellung, in der der Verankerungskörper 9 aufgrund der dazwischen liegenden Montageschiene 4 und des Anbauteils 17 nicht weiter zum Auflagerelement 5 hin bewegbar ist. In den Figuren 2, 3 und 4 befindet sich das rechte Befestigungselement 1, 1' in der Endstellung.

Die Markierungselemente 26 befinden sich in der Montagestellung in der ersten Markierstellung und stehen nach hinten nicht über das Auflagerelement 5 über. Wie beim linken Befestigungselement 1 der Figur 2 zu sehen, sind die Markierungselemente 26 vor dem Einführen ebenso wie in der in den Figuren 3 und 4 dargestellten Montagestellung im Auflagerelement 5 verborgen und können von einem Anwender kaum oder nicht gesehen werden, da sie in den seitlichen Durchgangsbohrungen 27 liegen und von der Platte 6 verdeckt werden. Die Markierungselemente 26 sind derart am Befestigungselement 1, 1' angeordnet, dass sie sich relativ zum Auflagerelement 5 bewegen, wenn sich der Verankerungskörper 9 axial zum Auflagerelement 5 hin bewegt. Durch das Einschrauben des Gewindeelements 2 in die Gewindeaufnahme 16 des Verankerungskörpers 9 wird das Auflagerelement 5 zum Koppelelement 18 bewegt und der in der Montagestellung vorhandene Abstand zwischen dem Auflagerelement 5 und dem Koppelelement 18 verringert. Da die als Markierungselemente 26 wirkenden Zapfen 25 axialfest mit dem Koppelelement 18 sind, bewegt sich das Auflagerelement 5 auch relativ zu ihnen in axialer Richtung, und die Markierungselemente 26 treten aus den seitlichen Durchgangsbohrungen 27 der Platte 6 aus, bis sie in der Endstellung über das Auflagerelement 5 gut sichtbar überstehen, wie dies bei den rechts angeordneten Befestigungselementen 1, 1' in den Figuren 2, 3 und 4 dargestellt ist. Die Markierungselemente 26 befinden sich nun in der zweiten Markierstellung. In der Endstellung ist das Auflagerelement 5 so weit zum Verankerungskörper 2 hin bewegt worden, dass das Auflagerelement 5 an dem Topf 23 des Koppelelements 18 anliegt, wodurch das Auflagerelement 5 nicht weiter zum Verankerungskörper 9 hin bewegt werden kann. In der Endstellung greifen zudem die nach vorn gebogenen Eingriffselemente 8 in die Durchgangsöffnung 29 des Anbauteils 17 formschlüssig ein, so dass auf das Anbauteil 17 und quer zur Montageschiene 4 wirkende Kräfte vom Auflagerelement 5 aufgenommen werden können.

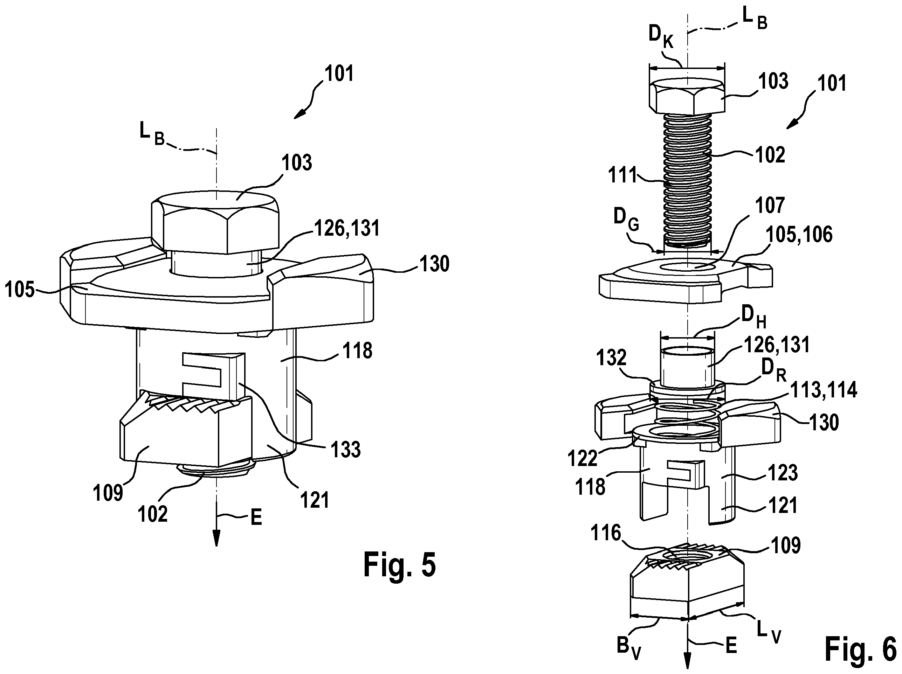

Das in den Figuren 5 bis 10 dargestellte dritte erfindungsgemäße Befestigungselement 101 weist eine im Wesentlichen gleiche Ausbildung und Verwendung auf, wie die in den Figuren 1 bis 4 dargestellten Befestigungselemente 1, 1'. Um Wiederholungen zu vermeiden, wird nachfolgend nur auf die Unterschiede der Befestigungselemente 1, 1', 101 eingegangen. Das dritte erfindungsgemäße Befestigungselement 101 unterscheidet sich insbesondere durch ein geändertes Koppelelement 118 und eine veränderte Anordnung des Markierungselements 126 und der Orientierungselemente 130.

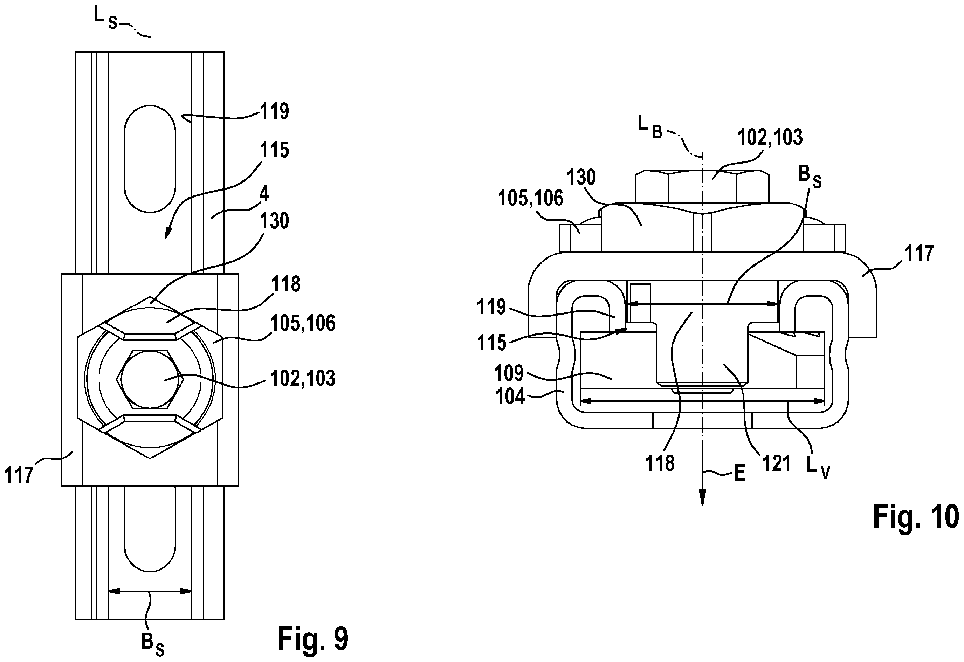

Das Koppelelement 118 weist ebenfalls einen Topf 123 auf, allerdings sind statt der Durchbrüche 20 radial vom Topf 123 abstehende und in Umfangsrichtung flächig ausgebildete Anschläge 133 ausgebildet, die eine Drehung des Befestigungselements 101 in der Öffnung 115 der Montageschiene 104 begrenzen, wie dies in Figur 9 zu sehen ist. Am hinteren Ende des Koppelelements 118 sind auf den Seiten, an denen die Fortsätze 121 ausgebildet sind, radial abstehende dreiecksförmige Orientierungselemente 130 angeformt, die einstückig mit dem Topf 123 sind und die die Platte 106 mittels einer Rastverbindung axialfest mit dem Koppelelement 118 verbinden. Zudem wurde beim dritten Befestigungselement 101 das Halteelement 10 durch eine hohlzylindrische Hülse 131 ersetzt, die eine Ringschulter 132 aufweist und zwischen der Schraubenfeder 113 und dem Kopfelement 103 des Gewindeelements 102 angeordnet ist, derart, dass die Schraubenfeder 113 über die als Markierungselement 126 wirkende Hülse 131 auf das Kopfelement 103 wirkt. Die Hülse 131 weist einen Durchmesser D_{H} auf, der kleiner als der Durchmesser der mittigen Durchgangsbohrung 107 ist, wobei der Durchmesser D_{R} der Ringschulter 132 größer als der der mittigen Durchgangsbohrung 107 ist. Die Hülse 131 durchgreift das Auflagerelement 105 durch die Durchgangsbohrung 107 so weit, bis die Ringschulter 132 an der in Einbringrichtung E vorderen Seite der Platte 106 anliegt, so dass die Hülse 131 mit ihrem hinteren Teil über das Auflagerelement 105 übersteht, wenn das Gewindeelement 102 nicht eingeschraubt und mittels des Auflagerelements 105 gegen das Verankerungselement 109 verspannt ist, sich also in der Montagestellung befindet, in der eine axiale Bewegung der Verankerungselements 109 relativ zum Auflagerelement 105 durch eine axiale Bewegung des Gewindeelements 102 möglich ist.

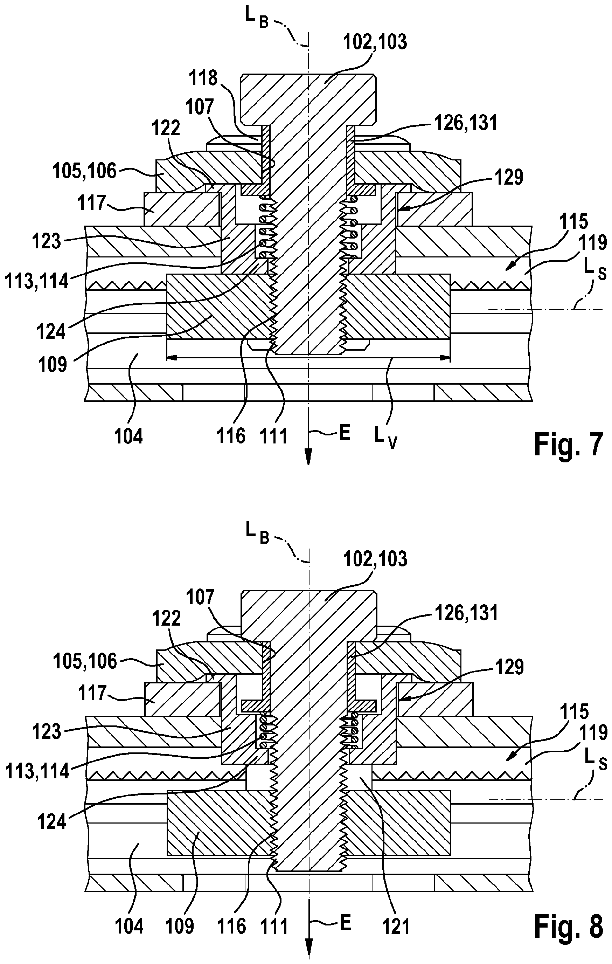

In den Figuren 7 bis 9 ist zu sehen, wie die Befestigung des Befestigungselements 101 in der Montageschiene 104 erfolgt. In Figur 7 ist das Einbringen des Befestigungselements 101 in die Öffnung 115 der Montageschiene 104 dargestellt. Die Hülse 107 steht aufgrund der Wirkung des Federelements 114 über das Auflagerelement 105 über, so dass es für einen Verwender sichtbar und gut wahrnehmbar ist. Da der Verankerungskörper 109 in dieser Stellung aber noch mit seiner längeren Seite parallel zur Schienenlängsachse L_{S} orientiert ist, sind die beiden Orientierungselemente 131 quer zur Schienenlängsachse L_{S} ausgerichtet, so dass ein Verwender weiß, dass sich das Befestigungselement 101 nicht in der Montagestellung in der Montageschiene 104 befindet. Zum Überführen des Befestigungselements 101 in die Montagestellung wird das Befestigungselement 101 um die Längsachse L_{B} des Befestigungselements 101 gedreht, wobei hierzu das Gewindeelement 102 in Einbringrichtung E relativ zum Auflagerelement 105, das fest auf der Montageschiene E aufliegt, bewegt wird, so dass das Gewindeelement 102 in Einbringrichtung E vor dem inneren Rand der Randabschnitte 119 liegt und das Befestigungselement 101 gedreht werden kann. Nach dem Drehen wird das Gewindeelement 102 nicht mehr gedrückt gehalten, wodurch sich das Federelement 114 entspannt und die Hülse 131 in die in Figur 5 dargestellte Stellung zurückbewegt wird. Das Befestigungselement 101 befindet sich nun in der Montagestellung, was ein Verwender an dem als Markierungselement 126 wirkenden sichtbaren Teil der Hülse 131 und an der Orientierung der beiden dreiecksförmigen Orientierungselemente 131 in Richtung der Schienenlängsachse L_{S} sehen kann. Nun wird noch das Gewindeelement 102 in die Gewindeaufnahme 116 des Verankerungskörpers 109 eingeschraubt und damit der Verankerungskörper 109 gegen das Auflagerelement 105 verspannt. Damit ist auch das Befestigungselement 101 gegen die Montageschiene 104 verspannt und gegenüber der Montageschiene 104 unverschieblich. Das Befestigungselement 101 befindet sich nun in der Endstellung, wie dies in Figur 10 dargestellt ist. Beim Verspannen wird die Hülse 131 durch das Kopfelement 102 in Einbringrichtung E bewegt, so weit, bis das Kopfelement 102 auf dem Auflagerelement 105 aufliegt und das Markierungselement im Auflagerelement 105 einliegt und verborgen ist. Da der Durchmesser D_{K} des Kopfelements 102 so groß ist, dass das Kopfelement 102 das Markierungselement 126 in der Endstellung vollständig abdeckt, ist es in der Endstellung für einen Verwender nicht sichtbar, was dem Verwender signalisiert, dass sich das Befestigungselement in der Endstellung befindet und somit planmäßig und sicher an der Montageschiene 104 befestigt ist.

Durch die Anordnung der Markierungselemente 26, 126 an den erfindungsgemäßen Befestigungselementen 1, 1', 101 wird ein Befestigungselement 1, 1', 101 geschaffen, bei dem ein Anwender auf einfache Art und Weise feststellen kann, ob sich das Befestigungselement 1, 1', 101 in einer Montage- oder einer Endstellung befindet. Insbesondere dann, wenn das Markierungselement 26, 126 eine andere Farbe aufweist, als das Kopfelement 3, 103, das Auflagerelement 5, 105 und beim Ausführungsbeispiel der Figuren 5 bis 10 das Koppelelement 118, kann schon aus größerer Entfernung von einem Verwender rein optisch wahrgenommen werden, ob sich das Befestigungselement 1, 1', 101 in einer Endstellung befindet oder nicht. Damit ist eine einfache Kontrolle der ordnungsgemäßen Montage des Befestigungselements 1, 1', 101 möglich.

### Bezuqszeichenliste

### Verfahren zum Befestigen eines Befestigungselements an einer Montageschiene sowie Befestigungselement

- 1, 1',101: Befestigungselement
- 2, 102: Gewindeelement
- 3, 103: Kopfelement des Gewindeelements 2, 102
- 4, 104: Montageschiene
- 5, 105: Auflagerelement
- 6, 106: Platte
- 7, 107: mittige Durchgangsbohrung
- 8: Eingriffselement
- 9, 109: Verankerungskörper
- 10: Halteelement
- 11, 111: Gewinde
- 12: Loch des Halteelements 10
- 13, 113: Schraubenfeder
- 14, 14', 114: Federelement
- 15, 115: Öffnung
- 16, 116: Gewindeaufnahme
- 17, 117: Anbauteil
- 18, 118: Koppelelement
- 19, 119: Randabschnitt
- 20: Durchbruch
- 21, 121: Fortsatz
- 22,122: Bund
- 23, 123: Topf
- 24, 124: Anschlagschulter
- 25: Zapfen
- 26, 126: Markierungselement
- 27: seitliche Durchgangsbohrung
- 28: Kegelfeder
- 29, 129: Durchgangsöffnung
- 30, 130: Orientierungselement
- 131: Hülse
- 132: Ringschulter
- 133: Anschlag
- a: Abstand
- B_{S}: Breite der Öffnung der Montageschiene 4, 104
- B_{V}: Breite des Verankerungskörpers 9, 109
- D_{G}: Außendurchmesser des Gewindes 11, 111
- D_{H}: Außendurchmesser der Hülse 131
- D_{K}: Durchmesser des Kopfelements 3, 103
- D_{L}: Innendurchmesser des Lochs 12
- D_{R}: Außendurchmesser der Ringschulter 132
- E: Einbringrichtung
- L_{B}: Längsachse des Befestigungselements 1, 1', 101
- L_{S}: Schienenlängsachse
- L_{V}: Länge des Verankerungskörpers 9, 109

## Patentansprüche

1. Verfahren zum Befestigen eines Befestigungselements (1, 1', 101) an einer Montageschiene (4, 104), wobei die Montageschiene (4, 104) eine Öffnung (15, 115) aufweist, deren Länge größer als deren Breite (B_{S}) ist, wobei das Befestigungselement (1, 1', 101) ein Auflagerelement (5, 105) zur Auflage auf einem Anbauteil (17, 117) oder der Montageschiene (4, 104) und einen Verankerungskörper (9, 109) zum Eingriff in die Montageschiene (4, 104) umfasst, und
wobei der Verankerungskörper (9, 109) eine Breite (B_{V}) aufweist, die kleiner oder gleich der Breite (B_{S}) der Öffnung (15) ist und wobei eine Länge (L_{V}) des Verankerungskörpers (9, 109) größer als die Breite (B_{S}) der Öffnung (15, 115) ist, das folgende Schritte umfasst:
a) Einbringen des Verankerungskörpers (9, 109) des Befestigungselements (1, 1', 101) in die Öffnung (15, 115) der Montageschiene (4, 104); und
b) Drehen des Verankerungskörpers (9, 109) in der Montageschiene (4, 104) in eine Montagestellung, derart, dass der Verankerungskörper (9, 109) seitliche Randabschnitte (19, 119) der Öffnung (15, 115) hintergreift;
**gekennzeichnet durch** den Schritt:
c) Verspannen des Verankerungskörpers (9, 109) gegen das Auflagerelement (5, 105), so dass sich das Befestigungselement (1, 1', 101) in einer Endstellung befindet, in der es relativ zur Montageschiene (4, 104) unverschiebbar und der Verankerungskörper (9, 109) nicht weiter zum Auflagerelement (5, 105) hin bewegbar ist, wobei beim Verspannen ein Markierungselement (26, 126), das sich farblich vom Auflagerelement (5, 105) unterscheidet, von einer ersten Markierstellung, die anzeigt, dass sich das Befestigungselement (1, 1', 101) in der Montagestellung befindet, in eine zweite Markierstellung bewegt wird, die anzeigt, dass sich das Befestigungselement (1, 1', 101) in der Endstellung befindet.

2. Verfahren nach Anspruch 1, **dadurch gekennzeichnet, dass** das Markierungselement (26, 126) beim Verspannen von der ersten Markierstellung im Wesentlichen parallel zu jener Achse in die zweite Markierstellung bewegt wird, entlang der sich der Verankerungskörper (9, 109) beim Verspannen relativ zum Auflagerelement (5, 105) bewegt.

3. Verfahren nach Anspruch 1 oder 2, **dadurch gekennzeichnet, dass** das Markierungselement (26) in der ersten Markierstellung verborgen und in der zweiten Markierstellung sichtbar ist.

4. Verfahren nach Anspruch 1 oder 2, **dadurch gekennzeichnet, dass** das Markierungselement (126) in der ersten Markierstellung sichtbar und in der zweiten Markierstellung verborgen ist.

5. Befestigungselement (1, 1', 101) zum Befestigen an einer Montageschiene (4, 104), wobei das Befestigungselement (1, 1', 101) einen Verankerungskörper (9, 109) zum Eingriff in die Montageschiene (4, 104) aufweist, der insbesondere axialfest mit einem Gewindeelement (2, 102) verbunden ist, das sich entlang einer Längsachse (L_{B}) in axialer Richtung erstreckt und das ein Auflagerelement (5, 105) zur Auflage auf der Montageschiene (4, 104) oder auf einem Anbauteil (17, 117) durchgreift,
wobei das Befestigungselement (1, 1', 101) ein Federelement (14, 14', 114) zwischen dem Auflagerelement (5, 105) und dem Verankerungskörper (9, 109) aufweist, und
wobei das Auflagerelement (5, 105) durch Verspannen gegen den Verankerungskörper (9, 109) von einer Montagestellung in eine Endstellung überführbar ist, in der der Verankerungskörper (9, 109) einen bestimmten Abstand vom Auflagerelement (5, 105) aufweist,
**dadurch gekennzeichnet,**
**dass** am Befestigungselement (1, 1', 101) ein Markierungselement (26, 126) angeordnet ist, das das Auflagerelement (5, 105) durchdringt und das beim Verspannen von einer ersten Markierstellung in eine zweite Markierstellung (5, 105) überführbar ist, in der es anzeigt, dass sich das Befestigungselement (1, 1', 101) in einer Endstellung befindet.

6. Befestigungselement nach Anspruch 5, **dadurch gekennzeichnet, dass** axial zwischen dem Auflagerelement (5, 105) und dem Verankerungskörper (9, 109) ein Koppelelement (18, 118) angeordnet ist, das mit dem Auflagerelement (5, 105) drehgekoppelt ist.

7. Befestigungselement nach Anspruch 5 oder 6, **dadurch gekennzeichnet, dass** das Befestigungselement (1, 1', 110) einen Bund (22, 122) zur Auflage auf einem Anbauteil (17. 117) oder einer Montageschiene (4, 104) aufweist, der axial zwischen dem Auflagerelement (5, 105) und dem Verankerungskörper (9, 109) angeordnet ist.

8. Befestigungselement nach Anspruch 6, **dadurch gekennzeichnet, dass** das Koppelelement (18) mit dem Auflagerelement (5) mittels des Markierungselements (26) drehgekoppelt ist.

9. Befestigungselement nach einem der Ansprüche 6 oder 8, **dadurch gekennzeichnet, dass** das Markierungselement (26) einstückig mit dem Koppelelement (18) ist.

10. Befestigungselement nach einem der Ansprüche 5 bis 9, **dadurch gekennzeichnet, dass** das Markierungselement (26) in der Endstellung sichtbar über das Auflagerelement (5) übersteht.

11. Befestigungselement nach einem der Ansprüche 5 bis 7, **dadurch gekennzeichnet, dass** das Markierungselement (126) zwischen dem Federelement (114) und einem Kopfelement (103) des Gewindeelements (102) angeordnet ist, wobei das Federelement (114) über das Markierungselement (126) mittelbar auf das Kopfelement (103) wirkt.

12. Befestigungselement nach einem der Ansprüche 5 bis 7 oder 11, **dadurch gekennzeichnet, dass** das Markierungselement (126) eine hohlzylindrische Hülse ist.

13. Befestigungselement nach einem der Ansprüche 5 bis 7, 11 oder 12, **dadurch gekennzeichnet, dass** am Befestigungselement (1, 1', 101) ein Orientierungsselement (30, 130) angeordnet ist, das die Ausrichtung des Verankerungskörpers (9, 109) anzeigt, wenn der Verankerungskörper (9, 109) in eine Öffnung (15) einer Montageschiene (4) eingeführt ist.

14. Befestigungselement nach einem der Ansprüche 5 bis 13, **dadurch gekennzeichnet, dass** das Markierungselement (26) in der Montagestellung verborgen ist und nicht über das Auflagerelement (5) übersteht oder, dass das Markierungselement (126) in der Endstellung verborgen ist und nicht über das Auflagerelement (105) übersteht.

15. Befestigungselement nach einem der Ansprüche 5 bis 14, **dadurch gekennzeichnet, dass** sich das Markierungselement (26, 126) farblich vom Auflagerelement (5, 105) unterscheidet.

## Claims

1. Method for fixing a fixing element (1, 1', 101) to a mounting rail (4, 104), wherein the mounting rail (4, 104) has an opening (15, 115) the length of which is greater than its width (B_{S}), the fixing element (1, 1', 101) comprising a bearing element (5, 105) for bearing on an add-on part (17, 117) or on the mounting rail (4, 104), and an anchoring body (9, 109) for engagement in the mounting rail (4, 104), and
wherein the anchoring body (9, 109) has a width (B_{V}) that is smaller than or equal to the width (B_{S}) of the opening (15) and wherein a length (L_{V}) of the anchoring body (9, 109) is greater than the width (B_{S}) of the opening (15, 115), which method comprises the following steps:
a) introduction of the anchoring body (9, 109) of the fixing element (1, 1', 101) into the opening (15, 115) in the mounting rail (4, 104); and
b) rotation of the anchoring body (9, 109) in the mounting rail (4, 104) into a mounted position in such a way that the anchoring body (9, 109) engages behind lateral edge portions (19, 119) of the opening (15, 115);
**characterised by** the step:
c) clamping of the anchoring body (9, 109) with respect to the bearing element (5, 105) so that the fixing element (1, 1', 101) is in an end position in which it is immovable relative to the mounting rail (4, 104), and the anchoring body (9, 109) cannot be moved further towards the bearing element (5, 105), wherein, during clamping, a marking element (26, 126), which differs in colour from the bearing element (5, 105), is moved from a first marking position, which indicates that the fixing element (1, 1', 101) is in the mounted position, to a second marking position which indicates that the fixing element (1, 1', 101) is in the end position.

2. Method according to claim 1, **characterised in that,** during clamping, the marking element (26, 126) is moved from the first marking position to the second marking position substantially parallel to that axis along which the anchoring body (9, 109) moves relative to the bearing element (5, 105) during clamping.

3. Method according to claim 1 or 2, **characterised in that** the marking element (26) is hidden in the first marking position and visible in the second marking position.

4. Method according to claim 1 or 2, **characterised in that** the marking element (126) is visible in the first marking position and hidden in the second marking position.

5. Fixing element (1, 1', 101) for fixing to a mounting rail (4, 104), wherein the fixing element (1, 1', 101) has an anchoring body (9, 109) for engagement in the mounting rail (4, 104), which anchoring body is especially axially fixedly connected to a threaded element (2, 102) which extends along a longitudinal axis (L_{B}) in an axial direction and passes through a bearing element (5, 105) for bearing on the mounting rail (4, 104) or on an add-on part (17, 117),
wherein the fixing element (1, 1', 101) has a spring element (14, 14', 114) between the bearing element (5, 105) and the anchoring body (9, 109), and wherein the bearing element (5, 105), by being clamped with respect to the anchoring body (9, 109), is transferrable from a mounted position to an end position in which the anchoring body (9, 109) has a specific spacing from the bearing element (5, 105),
**characterised in that**
on the fixing element (1, 1', 101) there is arranged a marking element (26, 126) which passes through the bearing element (5, 105) and which, during clamping, is transferrable from a first marking position to a second marking position (5, 105) in which it indicates that the fixing element (1, 1', 101) is in an end position.

6. Fixing element according to claim 5, **characterised in that** a coupling element (18, 118) is arranged axially between the bearing element (5, 105) and the anchoring body (9, 109), which coupling element is rotationally coupled to the bearing element (5, 105).

7. Fixing element according to claim 5 or 6, **characterised in that** the fixing element (1, 1', 101) has a collar (22, 122) for bearing on an add-on part (17, 117) or on a mounting rail (4, 104), which collar is arranged axially between the bearing element (5, 105) and the anchoring body (9, 109).

8. Fixing element according to claim 6, **characterised in that** the coupling element (18) is rotationally coupled to the bearing element (5) by means of the marking element (26).

9. Fixing element according to either one of claims 6 and 8, **characterised in that** the marking element (26) is integral with the coupling element (18).

10. Fixing element according to any one of claims 5 to 9, **characterised in that** in the end position the marking element (26) visibly protrudes beyond the bearing element (5).

11. Fixing element according to any one of claims 5 to 7, **characterised in that** the marking element (126) is arranged between the spring element (114) and a head element (103) of the threaded element (102), the spring element (114) acting indirectly on the head element (103) via the marking element (126).

12. Fixing element according to any one of claims 5 to 7 or 11, **characterised in that** the marking element (126) is a hollow-cylindrical sleeve.

13. Fixing element according to any one of claims 5 to 7, 11 or 12, **characterised in that** an orientation element (30, 130) is arranged on the fixing element (1, 1', 101), which orientation element indicates the alignment of the anchoring body (9, 109) once the anchoring body (9, 109) has been inserted into an opening (15) in a mounting rail (4).

14. Fixing element according to any one of claims 5 to 13, **characterised in that** the marking element (26) is hidden in the mounted position and does not protrude beyond the bearing element (5), or the marking element (126) is hidden in the end position and does not protrude beyond the bearing element (105).

15. Fixing element according to any one of claims 5 to 14, **characterised in that** the marking element (26, 126) differs in colour from the bearing element (5, 105).

## Revendications

1. Procédé pour fixer un élément de fixation (1, 1', 101) à un rail de montage (4, 104), sachant que ledit rail de montage (4, 104) est muni d'un orifice (15, 115) dont la longueur excède sa largeur (B_{S}), ledit élément de fixation (1, 1', 101) comprenant un élément d'appui (5, 105) destiné à reposer sur une pièce rapportée (17, 117) ou sur ledit rail de montage (4, 104), et un corps d'ancrage (9, 109) destiné à pénétrer dans ledit rail de montage (4, 104), et
sachant que le corps d'ancrage (9, 109) présente une largeur (Bv) inférieure ou égale à la largeur (Bs) dudit orifice (15), une longueur (Lv) dudit corps d'ancrage (9, 109) étant supérieure à ladite largeur (Bs) de l'orifice (15, 115),
incluant les étapes suivantes :
a) insertion du corps d'ancrage (9, 109) de l'élément de fixation (1, 1', 101) dans l'orifice (15, 115) du rail de montage (4, 104) ; et
b) rotation imprimée audit corps d'ancrage (9, 109) dans ledit rail de montage (4, 104), jusqu'à une position de montage, de façon telle que ledit corps d'ancrage (9, 109) emprisonne par-derrière des régions marginales latérales (19, 119) dudit orifice (15, 115) ;
**caractérisé par** l'étape consistant à :
c) bloquer le corps d'ancrage (9, 109) contre l'élément d'appui (5, 105), de telle sorte que l'élément de fixation (1, 1', 101) se trouve dans une position extrême dans laquelle il ne peut pas être déplacé par rapport au rail de montage (4, 104), et ledit corps d'ancrage (9, 109) ne peut être animé d'aucun mouvement supplémentaire en direction dudit élément d'appui (5, 105), sachant qu'au stade du blocage, un élément de repérage (26, 126), dont la couleur diffère de celle dudit élément d'appui (5, 105), est mû d'une première position de repérage, indiquant que l'élément de fixation (1, 1', 101) occupe la position de montage, à une seconde position de repérage qui indique que ledit élément de fixation (1, 1', 101) occupe la position extrême.

2. Procédé selon la revendication 1, **caractérisé par le fait que** l'élément de repérage (26, 126) est mû de la première position de repérage à la seconde position de repérage, au stade du blocage, pour l'essentiel parallèlement à l'axe le long duquel le corps d'ancrage (9, 109) se meut par rapport à l'élément d'appui (5, 105) au cours dudit blocage.

3. Procédé selon la revendication 1 ou 2, **caractérisé par le fait que** l'élément de repérage (26) est dissimulé dans la première position de repérage, et visible dans la seconde position de repérage.

4. Procédé selon la revendication 1 ou 2, **caractérisé par le fait que** l'élément de repérage (126) est visible dans la première position de repérage, et dissimulé dans la seconde position de repérage.

5. Elément de fixation (1, 1', 101) réalisé pour être fixé à un rail de montage (4, 104), ledit élément de fixation (1, 1', 101) comportant un corps d'ancrage (9, 109) destiné à pénétrer dans ledit rail de montage (4, 104) et relié, en particulier avec immobilité axiale, à un élément fileté (2, 102) qui s'étend dans le sens axial, le long d'un axe longitudinal (L_{B}), et traverse un élément d'appui (5, 105) destiné à reposer sur ledit rail de montage (4, 104) ou sur une pièce rapportée (17, 117),
ledit élément de fixation (1, 1', 101) étant pourvu d'un élément élastique (14, 14', 114), entre ledit élément d'appui (5, 105) et ledit corps d'ancrage (9, 109), et
l'élément d'appui (5, 105) pouvant être transféré, par blocage contre le corps d'ancrage (9, 109), d'une position de montage à une position extrême dans laquelle ledit corps d'ancrage (9, 109) se trouve à une distance déterminée par rapport audit élément d'appui (5, 105),
**caractérisé par le fait**
**qu'**un élément de repérage (26, 126), situé sur l'élément de fixation (1, 1', 101), traverse l'élément d'appui (5, 105) et peut être transféré, au stade du blocage, d'une première position de repérage à une seconde position de repérage dans laquelle il indique que ledit élément de fixation (1, 1', 101) occupe une position extrême.

6. Elément de fixation selon la revendication 5, **caractérisé par le fait qu'**un élément de couplage (18, 118), interposé entre l'élément d'appui (5, 105) et le corps d'ancrage (9, 109) dans le sens axial, est couplé en rotation audit élément d'appui (5, 105).

7. Elément de fixation selon la revendication 5 ou 6, **caractérisé par le fait que** ledit élément de fixation (1, 1', 101) est muni d'une collerette (22, 122) dédiée à l'appui sur une pièce rapportée (17, 117) ou sur un rail de montage (4, 104) et interposée, dans le sens axial, entre l'élément d'appui (5, 105) et le corps d'ancrage (9, 109).

8. Elément de fixation selon la revendication 6, **caractérisé par le fait que** l'élément de couplage (18) est couplé en rotation à l'élément d'appui (5) au moyen de l'élément de repérage (26).

9. Elément de fixation selon l'une des revendications 6 ou 8, **caractérisé par le fait que** l'élément de repérage (26) forme un seul tenant avec l'élément de couplage (18).

10. Elément de fixation selon l'une des revendications 5 à 9, **caractérisé par le fait que** l'élément de repérage (26) fait saillie de manière visible, dans la position extrême, au-delà de l'élément d'appui (5).

11. Elément de fixation selon l'une des revendications 5 à 7, **caractérisé par le fait que** l'élément de repérage (126) est interposé entre l'élément élastique (114) et un élément (103) formant tête de l'élément fileté (102), ledit élément élastique (114) agissant indirectement sur ledit élément (103) formant tête, par l'intermédiaire dudit élément de repérage (126).

12. Elément de fixation selon l'une des revendications 5 à 7 ou 11, **caractérisé par le fait que** l'élément de repérage (126) est une douille cylindrique creuse.

13. Elément de fixation selon l'une des revendications 5 à 7, 11 ou 12, **caractérisé par le fait qu'**un élément d'orientation (30, 130), situé sur ledit élément de fixation (1, 1', 101), indique l'orientation du corps d'ancrage (9, 109) lorsque ledit corps d'ancrage (9, 109) est introduit dans un orifice (15) d'un rail de montage (4).

14. Elément de fixation selon l'une des revendications 5 à 13, **caractérisé par le fait que**, dans la position de montage, l'élément de repérage (26) est dissimulé et ne fait pas saillie au-delà de l'élément d'appui (5) ; ou **par le fait que**, dans la position extrême, ledit élément de repérage (126) est dissimulé et ne fait pas saillie au-delà dudit élément d'appui (105).

15. Elément de fixation selon l'une des revendications 5 à 14, **caractérisé par le fait que** l'élément de repérage (26, 126) se différencie de l'élément d'appui (5, 105) par sa couleur.
